# EUROPEAN PATENT APPLICATION

(11) **EP 3 051 735 A2**
(43) Date of publication of application: **03.08.2016**
(21) Application number: 14847670.8
(22) Date of filing: 26.09.2014
(51) Int. Cl.: H04L 5/00, H04L 5/14, H04L 1/18, H04W 72/00

(54) **METHOD, APPARATUS AND SYSTEM OF OPERATION BASED ON SUBFRAME GROUP AND SIGNALING GENERATION**

(30) Priority: 27.09.2013 CN 201310459547
(71) Applicant: Alcatel Lucent, 92100 Boulogne-Billancourt (FR)
(72) Inventor: SUN, Fanglei, Shanghai 201206 (CN); YANG, Tao, Shanghai 201206 (CN)
(74) Representative: 2SPL Patentanwälte PartG mbB
(86) International application number: PCT/IB2014/002249
(87) International publication number: WO 2015/044779

(57) **Abstract**

The present invention provides a method, apparatus, and system for operating and for generating signaling based on subframe sets. A base station of the present invention belongs to a TDD system. Neighboring cells in the TDD system can adopt different uplink and downlink subframe configurations at the same time. The user equipment obtains indication information of two subframe sets, which two subframe sets are obtained by partitioning at least one subframe in the uplink and downlink subframe configuration(s) based on interference level(s) of the at least one subframe, and performs a corresponding operation based on the subframe set to which the at least one subframe belongs, respectively, when performing an uplink or downlink operation with a base station on the at least one subframe. Compared with the prior art, the user equipment of the present invention can perform a corresponding operation based on subframe sets including subframes suffering different levels of interference.

## Description

### FIELD OF THE INVENTION

The present invention relates to the field of TDD (Time Division Duplex) communication technology, and more specifically to a method, apparatus, and system for operating and for generating signaling based on subframe sets.

### BACKGROUND OF THE INVENTION

At present, uplink and downlink subframe configurations of neighboring cells in a TDD system are always identical. However, when a present cell served by a base station has a different demand from its neighboring cell, the present cell needs to change its uplink and downlink subframe configurations, such that the present cell and its neighboring cell employ the different uplink and downlink subframe configurations. As a result, on some subframes, a relatively large inter-cell interference will occur, while on some subframes, the inter-cell interference is relatively small and may even be ignored.

The prior art has not formulate a corresponding standard such that the TDD system can fit the above scenarios well.

### SUMMARY OF THE INVENTION

An objective of the present invention is to provide a method, apparatus, and system for operating and generating signaling based on subframe sets.

According to one aspect of the present invention, there is provided a signaling generation apparatus for generating signaling including subframe set information in a base station, wherein the base station belongs to a TDD system, neighboring cells in the TDD system can adopt different uplink and downlink subframe configurations within a same time, and the signaling generation apparatus comprises:
a generating module configured to generate signaling sent to a user equipment in a cell served by the base station, which signaling includes indication information for two subframe sets, which two subframe sets are obtained by partitioning the at least one subframe based on an interference level of at least one subframe in the uplink and downlink subframe configurations.

According to another aspect of the present invention, there is provided an operating apparatus for operating in a user equipment based on subframe sets, wherein the user equipment is located in a TDD system, neighboring cells in the TDD system can adopt different uplink and downlink subframe configurations within a same time, and the operating apparatus comprises: an obtaining module configured to obtain indication information of two subframe sets, which two subframe sets are obtained by partitioning the at least one subframe based on an interference level of at least one subframe in the uplink and downlink subframe configurations; an performing module configured to perform a corresponding operation based on the subframe sets to which the east one subframe belongs when performing an uplink or downlink operation with a base station on the at least one subframe.

According to a further aspect of the present invention, there is further provided a method for generating signaling including subframe set information in a base station, wherein the base station belongs to a TDD system, neighboring cells in the TDD system can adopt different uplink and downlink subframe configurations within a same time, and the method comprises:
a. generating signaling sent to a user equipment in a cell served by the base station, which signaling includes indication information for two subframe sets, which two subframe sets are obtained by partitioning the at least one subframe based on an interference level of at least one subframe in the uplink and downlink subframe configurations.

According to a still further aspect of the present invention, there is provided a method for operating in a user equipment based on subframe sets, wherein the user equipment is located in a TDD system, neighboring cells in the TDD system can adopt different uplink and downlink subframe configurations within a same time, and the method comprises:
A. obtaining indication information of two subframe sets, which two subframe sets are obtained by partitioning the at least one subframe based on an interference level of at least one subframe in the uplink and downlink subframe configurations;
B. performing a corresponding operation based on the subframe sets to which the east one subframe belongs when performing an uplink or downlink operation with a base station on the at least one subframe.

Compared with the prior art, the present invention has the following advantages: 1) the user equipment may perform a corresponding operation based on subframe sets including subframes suffering different levels of interference; 2) the base station may notify a changed subframe set to the user equipment by signaling; 3) it may realize notification of subframe sets under a dynamic mode or a semi-static mode, which satisfies the needs of changes of subframe set of different orders of magnitude.

### BRIEF DESCRIPTION OF THE ACCOMPANYING DRAWINGS

Other features, objectives, and advantages of the present invention will become more apparent through the following depiction made to the non-limiting embodiments with reference to the accompanying drawings:
Fig. 1a shows a schematic diagram of a specific instance of CSI subframe patterns;
Fig. 1b shows a schematic diagram of a specific instance of subframe patterns of uplink power control signaling;
Fig. 2 shows a flow diagram of a method according to one preferred embodiment of the present invention;
Fig. 3 shows a schematic diagram of a system structure according to one preferred embodiment of the present invention.

In the accompanying drawings, same or similar reference documents represent the same or similar components.

### DETAILED DESCRIPTION OF THE PREFERRED EMBODIMENTS

In order to explain the solution of the present invention more clearly, TDD uplink and downlink subframe configurations will be first explained:

The TDD uplink and downlink subframes may have the following 7 configuration patterns as shown in Table 1; wherein a radio frame may comprise 10 subframes, which subframes may be labelled as 0, 1, 2, 3, 4, 5, 6, 7, 8, 9; in Table 1, "D" denotes downlink subframes, "U" denotes uplink subframes, and "S" denotes special subframes, wherein subframes 3-4 and 6-9 are variable, while subframe 6 includes a special subframe. Without considering the special subframes, it may be believed that subframes 3-4, 7-9 are variable. In other words, in one frame, there are 5-6 bits of subframes are variable.

**Table 1**

| Uplink and downlink subframe configurations | Subframe number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

In the TDD system of the present invention, neighboring cells can employ different uplink and downlink subframe configurations at the same time. Hereinafter, the present invention will be described in further detail with reference to the accompanying drawings.

In the present invention, all or a part of subframes in one frame may be divided into two subframe sets, wherein subframes in one subframe set suffers less interference from neighboring cells than the interference suffered by subframes in the other subframe set from neighboring cells. In the present invention, three patterns may be adopted, which are fixed pattern, semi-static pattern, and dynamic pattern. Hereinafter, the three patterns will be described in detail according to the method of the present invention:

### FIXED PATTERN

In the fixed pattern, the above two subframe sets are fixed. Refer to Table 1. In the 7 uplink and downlink subframe configurations of the TDD system, subframes 3-4 and 6-9 are variable in different configurations, while subframes 0-2 and 5 are invariable. Therefore, even neighboring cells in the TDD system adopt different uplink and downlink subframe configurations, in the case of ignoring UE-to-UE (user equipment to user equipment) interference, the interference suffered by subframes 0-2 and 5 from neighboring cells is in a different order of magnitude from the interference suffered by subframes 3-4 and 6-9 from neighboring cells; or, without considering special subframes, the interference suffered by subframes 0-2 and 5 from neighboring cells is relatively small, while the interference suffered by subframes 3-4 and 7-9 from neighboring cells is relatively large.

Therefore, based on the interference level suffered by subframes, at least one subframe may be fixedly divided into two subframe sets, wherein one subframe set includes subframes 0-2 and 5, while the other subframe set includes subframes 3-4 and 6-9 or 3-4 and 7-9. Preferably, when being applied to CSI (Channel State Information) test, what are included in the two subframe sets are all downlink subframes; when being applied to ULPC (Uplink Power Control), what are included in the two subframe sets are all uplink subframes.

The two fixed subframe sets may be pre-configured in a base station and a user equipment. Then, for the user equipment, the following steps may be performed:
- the user equipment obtains pre-configured indication information of the two subframe sets. In the fixed pattern, the indication information may directly indicate the subframes included in the two subframe sets, respectively;
- when the user equipment performs uplink or downlink operations with the base station on subframes, performs corresponding operations based on the subframe set to which the at least one subframe belongs, respectively.

Since the indication information of the two subframe sets have been pre-configured into the user equipment, the user equipment can obtain the indication information and then determine a subframe set to which one subframe belongs, thereby performing a corresponding operation.

For example, when a subframe belongs to a subframe set suffering less interference, the user equipment may transmit a signal to the base station with a lower power; when a subframe belongs to a subframe set suffering greater interference, the user equipment may transmit a signal with a higher power.

It should be noted that the above example is only for better illustrating the technical solution of the present invention, rather than limiting the present invention. Those skilled in the art should understand that any implementation manner of performing a corresponding operation based on the subframe set to which the at least one subframe belongs, respectively, should be included within the scope of the present invention.

It should be further noted that in the fixed pattern of the present invention, variable subframes in different TDD uplink and downlink subframe configurations are divided into one set, while the invariable subframes are divided into the other set. Therefore, the two subframes in fixed pattern according to the present invention are not limited to subframes 0-2 and 5 and subframes 3-4 and 6-9 or 3-4 and 7-9. Those skilled in the art should understand, when the above 7 optional configurations of the TDD uplink and downlink configurations change, the two sets of subframes in the fixed pattern will change accordingly, and the changed subframe grouping manners should be likewise included within the scope of the present invention.

Through the fixed pattern, both the user equipment and the base station may perform differentiated operations on the subframes based on the interference as suffered in the two scenarios without performing a complex operation.

### SEMI-STATIC PATTERN:

The variation frequency of subframes in the two subframe sets in the semi-static pattern is generally lower than the variation frequency of the subframes in the two subframe sets in the dynamic pattern.

In the semi-static pattern, principally at least one subframe varying in different uplink and downlink subframe configurations is divided into two subframe sets. Specifically, the base station may determine a current interference level of one variable subframe (e.g., subframes 3-4 and 6-9 or 3-4 and 7-9) based on the specific condition of one cell (e.g., the uplink and downlink subframe configurations adopted by the cell and its neighboring cells, etc.), thereby determining the subframe set to which that subframe belongs.

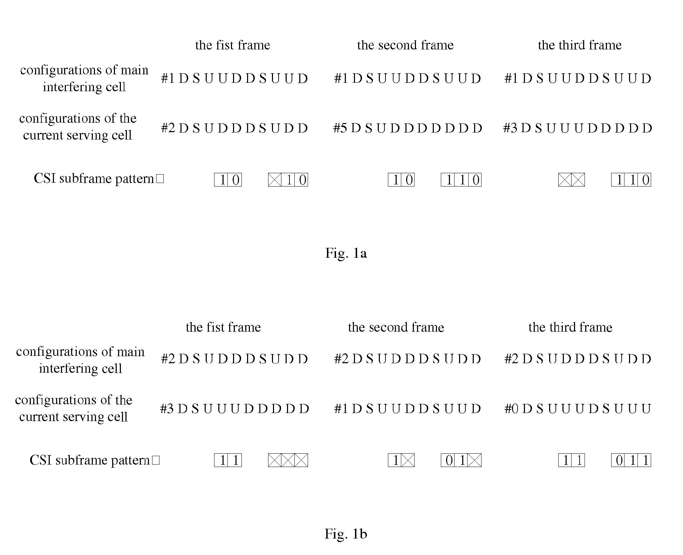

Refer to Fig. 1a, such an example is taken: in CSI test, determining two subframe sets based on the uplink and downlink subframe configurations adopted by the current serving cell and one of its main interfering cell. The main interfering cell adopts the uplink and downlink subframe configuration 1 shown in the Table 1 in the first to third frames; the current serving cell adopts the uplink and downlink subframe configuration 2 shown in Table 1 in the first frame; subframe 6, which is a special subframe, is not considered; then, in subframe 3, the uplink transmission is arranged in a neighboring cell (i.e., main interfering cell); in this way, subframe 3 will not suffer downlink interference from the main interfering cell, or subframe 3 suffers a lower interference. In this example, this scenario is identified by "1," which indicates that subframe 3 belongs to the subframe set identified by "1". Subframe 4 will suffer an interference or a larger interference from the main interfering cell. In this example, this scenario is identified by "0," which indicates that subframe 4 belongs to the subframe set identified by "0." In subframe 7, since the current serving cell is uplink here, while the CSI test uses downlink here, it needs not concern whether subframe 7 suffers interference or not. In this example, this scenario is represented by "×"; and so on and so forth, grouping of other subframes in the first frame and grouping of subframes in the second and third frames are shown in Fig. 1a. It should be noted that for subframes identified by "×," they may be arbitrarily identified by "0" or "1."

Fig. 1b shows an example of determining, in ULPC, two subframe sets based on the uplink and downlink subframe configurations adopted by the present serving cell and one of its main interfering cell. In this example, "1" indicates that the ULPC of the second set of the OLPC (Open Loop Power Control)/ CLPC (Closed Loop Power Control) parameters suffers a BS-to-BS(base station to base station) interference from the interfering cell, or suffers a greater BS-to-BS interference from the interfering cell; "0" indicates that the ULPC (Uplink Power Control) of the first set of OLPC/CLPC parameters does not suffer the BS-to-BS interference from the interfering cell, or suffers a minor BS-to-BS interference from the interfering cell; while "×" indicates not concerning whether it suffers the BS-to-BS interference from the interfering cell.

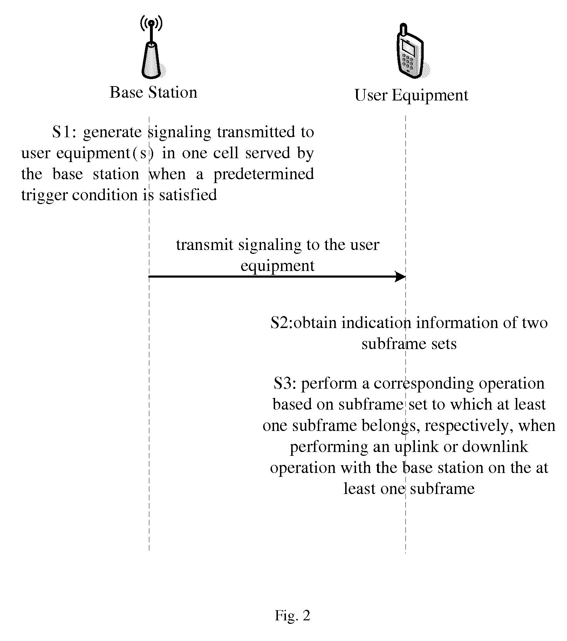

With reference to Fig. 2, in the semi-static pattern of the present invention, a base station of the TDD system performs the following step S1, and the user equipment performs the following step S2 and step S3.

In step S1, the base station generates signaling sent to a user equipment in a cell served by the base station when a predetermined trigger condition is satisfied, which signaling includes indication information for two subframe sets, which two subframe sets are obtained by partitioning at least one subframe in the uplink and downlink subframe configuration(s) based on interference level(s) of the at least one subframe. Herein, in the semi-static pattern, the signaling generated by the base station has a transmit frequency lower than the transmit frequency of the signaling generated in the dynamic pattern, e.g., the transmit time interval may be at a 100ms order of magnitude. For example, in the semi-static pattern, the signaling generated by the base station includes RRC (Radio Resource Control) signaling, etc.

Herein, the predetermined trigger condition may include any condition that can trigger the base station to generate the above signaling. Preferably, the predetermined trigger condition includes, but not limited to: 1) the TDD uplink and downlink subframe configuration of the present cell changes; 2) the TDD uplink and downlink subframe configuration(s) of the interfering cell(s) changes, and the like. Those skilled in the art should understand, the above two trigger conditions are only exemplary, and any other conditions that can trigger the base station to generate the above signaling should be included within the scope of the present invention.

Herein, the base station may divide the at least one subframe to obtain two subframe sets based on the interference suffered by the at least one subframe in the uplink and downlink subframe configuration. It should be noted that the base station may notify the user equipment of the two subframe sets through the bitmap manners shown with reference to Fig. 1a and Fig. 1b; or, the base station may also notify the user equipment of the two subframe sets by notifying the two subframe sets, respectively.

Herein, the indication information of the two subframe sets may indicate the subframes included into the two subframe sets, respectively, in a plurality of manners. For example, the indication information includes two groups of bit information corresponding to the two subframe sets, respectively, while each bit in each group of bit information is for indicating an interference suffered by a frame in the subframe set corresponding to this group of bit information from the interfering cell; for example, the indicating information may directly include "1" and "0" corresponding to multiple subframes, as depicted in the examples shown in Fig. 1a and Fig. 1b, thereby directly indicating the subframe set to which the multiple subframes belong in a manner of bitmap; or, the indication information may employ other manner to indicate the subframes included in the two subframe sets, respectively, which other manner will be described in detail in the subsequent "dynamic pattern."

Specifically, the base station may attach the indication information of the two subframe sets into the RRC signaling to be sent to the user equipment in the cell served by the base station.

It should be noted that the above example is only for better illustrating the technical solution of the present invention, rather than limiting the present invention. Those skilled in the art should understand, any implementation of generating, in the semi-static pattern, a signaling transmitted to one cell served by the base station when a predetermined trigger condition is satisfied, should be included within the scope of the present invention.

Then, after the base station transmits the signaling to the user equipment, in step S2, the user equipment obtains the indication information of the two subframe sets. Specifically, in the semi-static pattern, the user equipment receives signaling, from the base station, including the indication information.

In step S3, when performing an uplink or a downlink operation with the base station on the at least one subframe, the user equipment performs a corresponding operation based on the subframe set to which the at least one subframe belongs, respectively.

For example, when a subframe belongs to a subframe set suffering less interference, the user equipment may transmit a signal to the base station with a lower power; when a subframe belongs to a subframe set suffering a greater interference, the user equipment may transmit a signal to the base station with a larger power.

It should be noted that the above example is only for better illustrating the technical solution of the present invention, rather than limiting the present invention. Those skilled in the art should understand, any implementation manner of performing a corresponding operation based on the subframe set to which the at least one subframe belongs, respectively, when performing an uplink or a downlink operation with the base station on the at least one subframe, should be included within the scope of the present invention.

Through the semi-static pattern, the base station may notify the variable two subframe sets to the user equipment with a frequency lower than the dynamic pattern, such that the user equipment performs differentiated operations on the two subframe sets.

### DYNAMIC PATTERN:

The variation frequency of the subframes in the two subframe sets in the dynamic pattern is generally lower than the variation frequency of the subframes in the two subframe sets in the semi-static pattern.

In the dynamic pattern, similar to the semi-static pattern, the main operation is that at least one varying subframe in different uplink and downlink subframe configurations are divided into two subframe sets. The specific dividing manner may refer to the depiction in the semi-static pattern, which will not be detailed here.

In the dynamic pattern, the base station performs step S1'; in the dynamic pattern, the user equipment performs step S2' and step S3'. The sequence of performing the step S1', step S2', and step S3' is similar to that of performing the step S1, step S2, and step S3.

In step S1', the base station generates signaling sent to a user equipment in a cell served by the base station when a predetermined trigger condition is satisfied, which signaling includes indication information for two subframe sets, which two subframe sets are obtained by partitioning at least one subframe in the uplink and downlink subframe configuration(s) based on interference level(s) of the at least one subframe.

Herein, in the dynamic pattern, the signaling generated by the base station has a transmit frequency higher than the transmit frequency of the signaling generated in the semi-static pattern, e.g., the transmit time interval may be as high as 10ms order of magnitude. In the dynamic pattern, the signaling generated by the base station includes physical layer signaling, and the like.

Preferably, the physical layer signaling generated by the base station includes, but not limited to:
1) the base station directly generates a new physical layer signaling including indication information of the two subframes. The new physical layer signaling includes the indication information; preferably, when there is a configuration of multiple carrier units, the new physical layer signaling further comprises an index of carrier units;
2) the base station attaches the indication information to a pre-existing physical layer signaling. Preferably, the pre-existing physical layer signaling includes, but not limited to: a) uplink and downlink dynamic configuration signaling; b) uplink and downlink UE (user equipment) schedule signaling. This physical layer signaling includes contents that should be included in the pre-existing physical layer signaling and the indication information.

It should be noted that the above example is only for better illustrating the technical solution of the present invention, rather than limiting the present invention. Those skilled in the art should understand, any generated physical layer signaling including the indication information should be included within the scope of the present invention.

Herein, the indication information of the two subframe sets may adopt a plurality of manners to indicate the subframes included within the two subframe sets, respectively, wherein the manner "the indication information includes two groups of bit information corresponding to the two subframe sets, respectively, while each bit in each group of bit information is for indicating an interference suffered by a frame in the subframe set corresponding to this group of bit information from the interfering cell" has been depicted in detail in the above illustration of "semi-static pattern," which will not be detailed here. Hereinafter, another implementation of the indication information will be introduced:

The indication information includes one of identification information of multiple subframe patterns, wherein one subframe pattern indicates one of the multiple combination manners of that the at least one subframe varying in different uplink and downlink subframe configurations belongs to the two subframe sets, respectively. Since the TDD uplink and downlink subframe configurations have 5-6 variable subframes, there are 2⁵ to 2⁶ kinds of combination manners in total in which the at least one subframe belongs to the two subframe sets, respectively. The three CSI test subframe patterns and the three ULPC subframe patterns as shown in Figs. 1a and 1b are just several of all possible subframe patterns.

It should be noted that, in order to reduce the number of subframe patterns in use, so as to further reduce the bits occupied by identification information of subframe patterns, the base station may select, from among all subframe patterns of the respective subframes, the multiple subframe patterns used in the present embodiment. Preferably, the base station may select more commonly-used multiple subframe patterns based on various factors, e.g., use frequency or use amount of subframe patterns within a period of time. More preferably, the amount of subframe patterns selected by the base station may be 8 or less, so as to control the number of bits occupied by the identification information of the subframe patterns to be three or less.

Besides, in the present implementation, the base station needs to transmit the combination manners corresponding to the identification information of respective subframe patterns in use to the user equipment in the cell, wherein the base station may transmit the combination manner corresponding to the identification information to the user equipment before step S1' of the present invention.

After the base station transmits the signaling to the user equipment, in step S2', the user equipment obtains the indication information of the two subframe sets. Step S2' is identical or similar to step S2, which will not be detailed here.

In step S3', when performing an uplink or downlink operation with the base station on the at least one subframe, the user equipment performs a corresponding operation based on the subframe set to which the at least one subframe belongs, respectively. The corresponding operation has been described in detail in the depiction of step S3, which will not be detailed here.

Herein, when the indication information of two subframe sets includes one of identification information of the multiple subframe patterns, the user equipment receives combination manners corresponding to the identification information of respective subframe patterns from the base station; besides, the step S3' further includes: determining the subframe set to which the at least subframe belongs, respectively, based on one piece of identification information of subframe patterns included in the signaling and the combination manners; and performing a corresponding operation based on the subframe set to which the at least subframe belongs, respectively, when performing an uplink or downlink operation with the base station on the at least one subframe.

Through the dynamic pattern, the base station may notify the varying two subframe sets to the user equipment with a higher frequency, such that the user equipment performs differentiated operations on the two subframe sets.

It should be noted that in the semi-static pattern and the dynamic pattern, a plurality of manners may be adopted to notify the user equipment to obtain indication information from corresponding carrier unit(s). Hereinafter, two solutions will be provided for illustration.

In the first solution, matching relationship(s) between carrier indicate field (CIF) identification(s) of carrier units of respective user equipment(s) with carrier aggregation(s) in the current serving cell and physical identifier(s) of carrier unit(s) of the base station serving the cell might be different, and the signaling generated by the base station comprises physical identifier(s) of carrier unit(s) of the base station. Besides, the base station pre-transmits the matching relationships between the physical identification(s) of the carrier unit(s) of the user equipment(s) and the carrier indicate filed identification(s) of the carrier unit(s) of the base station serving the cell to respective user equipment(s) in the cell. Then, in the above step S2', the user equipment receives the signaling from the base station, and determines carrier unit(s), which the indication information is applicable to, from carrier unit(s) of the signaling based on a pre-obtained matching relationship(s) between physical identification(s) of carrier unit(s) of the user equipment and carrier indicate field identification(s) of carrier unit(s) of the base station.

In the second solution, matching relationship(s) between carrier indicate field identification(s) of carrier unit(s) of respective user equipment(s) in the current serving cell and carrier indicate field identification(s) of the carrier unit(s) of the base station serving the cell are identical, wherein the base station further performs the following step: transmitting the carrier indicate field identification(s) of carrier unit(s) of respective user equipment(s) to the respective user equipment(s) in the cell. As a result, the respective user equipment(s) may obtain indication information based on uniform carrier indicate field identification(s), without bothering to determine their own carrier indicate field identification(s) based on the physical identification(s) of the carrier unit(s) of the base station.

It should be noted that the above two solutions are only for better illustrating the technical solution of the present invention, not intended to limit the present invention. Those skilled in the art should understand, any implementation manner enabling the user equipment to determine the carrier unit(s) in use based on the indication information should be included within the scope of the present invention.

Through the above solutions, even the signaling changes due to attachment of indication information, the user equipment can still accurately obtain the indication information.

Hereinafter, the three patterns, i.e., fixed pattern, semi-static pattern, and dynamic pattern, will be described in detail based on the apparatus of the present invention.

### FIXED PATTERN

In the fixed pattern, the above two subframe sets are fixed. Refer to Table 1. In the 7 uplink and downlink subframe configurations of the TDD system, subframes 3-4 and 6-9 are variable in different configurations, while subframes 0-2 and 5 are invariable. Therefore, even neighboring cells in the TDD system adopt different uplink and downlink subframe configurations, in the case of ignoring UE-to-UE (user equipment to user equipment) interference, the interference suffered by subframes 0-2 and 5 from neighboring cells is in a different order of magnitude from the interference suffered by subframes 3-4 and 6-9 from neighboring cells; or, without considering special subframes, the interference suffered by subframes 0-2 and 5 from neighboring cells is relatively small, while the interference suffered by subframes 3-4 and 7-9 from neighboring cells is relatively large.

Therefore, based on the interference level suffered by subframes, at least one subframe may be fixedly divided into two subframe sets, wherein one subframe set includes subframes 0-2 and 5, while the other subframe set includes subframes 3-4 and 6-9 or 3-4 and 7-9. Preferably, when being applied to CSI (Channel State Information) test, what are included in the two subframe sets are all downlink subframes; when being applied to ULPC (Uplink Power Control), what are included in the two subframe sets are all uplink subframes.

The fixed two subframe sets may be pre-configured in the base station and the user equipment. For the user equipment, it comprises an operating apparatus. The obtaining module 20 and the performing module 30 included in the operating apparatus may perform the following operations:
The obtaining module 20 obtains pre-configured indication information of the two subframe sets. In the fixed pattern, the indication information may directly indicate the subframes included in the two subframe sets, respectively;
When the user equipment performs uplink or downlink operations with the base station on subframes, the performing module 30 performs corresponding operations based on the subframe set to which the at least one subframe belongs, respectively.

Since the indication information of the two subframe sets have been pre-configured into the user equipment, the obtaining module 20 can obtain the indication information and then determine a subframe set to which one subframe belongs, thereby the performing module 30 performing a corresponding operation.

For example, when a subframe belongs to a subframe set suffering less interference, the performing module 30 may transmit a signal to the base station with a lower power; when a subframe belongs to a subframe set suffering greater interference, the performing module 30 may transmit a signal with a higher power.

It should be noted that the above example is only for better illustrating the technical solution of the present invention, rather than limiting the present invention. Those skilled in the art should understand that any implementation manner of performing a corresponding operation based on the subframe set to which the at least one subframe belongs, respectively, should be included within the scope of the present invention.

It should be further noted that in the fixed pattern of the present invention, variable subframes in different TDD uplink and downlink subframe configurations are divided into one set, while the invariable subframes are divided into the other set. Therefore, the two subframes in fixed pattern according to the present invention are not limited to subframes 0-2 and 5 and subframes 3-4 and 6-9 or 3-4 and 7-9. Those skilled in the art should understand, when the above 7 optional configurations of the TDD uplink and downlink configurations change, the two sets of subframes in the fixed pattern will change accordingly, and the changed subframe grouping manners should be likewise included within the scope of the present invention.

Through the fixed pattern, both the user equipment and the base station may perform differentiated operations on the subframes based on the interference as suffered in the two scenarios without performing a complex operation.

### SEMI-STATIC PATTERN:

The variation frequency of subframes in the two subframe sets in the semi-static pattern is generally lower than the variation frequency of the subframes in the two subframe sets in the dynamic pattern.

In the semi-static pattern, principally at least one subframe varying in different uplink and downlink subframe configurations is divided into two subframe sets. Specifically, the base station may determine a current interference level of one variable subframe (e.g., subframes 3-4 and 6-9 or 3-4 and 7-9) based on the specific condition of one cell (e.g., the uplink and downlink subframe configurations adopted by the cell and its neighboring cells, etc.), thereby determining the subframe set to which that subframe belongs.

Refer to Fig. 1a, such an example is taken: in CSI test, determining two subframe sets based on the uplink and downlink subframe configurations adopted by the current serving cell and one of its main interfering cell. The main interfering cell adopts the uplink and downlink subframe configuration 1 shown in the Table 1 in the first to third frames; the current serving cell adopts the uplink and downlink subframe configuration 2 shown in Table 1 in the first frame; subframe 6, which is a special subframe, is not considered; then, in subframe 3, the uplink transmission is arranged in a neighboring cell (i.e., main interfering cell); in this way, subframe 3 will not suffer downlink interference from the main interfering cell, or subframe 3 suffers a lower interference. In this example, this scenario is identified by "1," which indicates that subframe 3 belongs to the subframe set identified by "1". Subframe 4 will suffer an interference or a larger interference from the main interfering cell. In this example, this scenario is identified by "0," which indicates that subframe 4 belongs to the subframe set identified by "0." In subframe 7, since the current serving cell is uplink here, while the CSI test uses downlink here, it needs not concern whether subframe 7 suffers interference or not. In this example, this scenario is represented by "×"; and so on and so forth, grouping of other subframes in the first frame and grouping of subframes in the second and third frames are shown in Fig. 1a. It should be noted that for subframes identified by "×," they may be arbitrarily identified by "0" or "1."

Fig. 1b shows an example of determining, in ULPC, two subframe sets based on the uplink and downlink subframe configurations adopted by the present serving cell and one of its main interfering cell. In this example, "1" indicates that the ULPC of the second set of the OLPC (Open Loop Power Control)/ CLPC (Closed Loop Power Control) parameters suffers a BS-to-BS(base station to base station) interference from the interfering cell, or suffers a greater BS-to-BS interference from the interfering cell; "0" indicates that the ULPC (Uplink Power Control) of the first set of OLPC/CLPC parameters does not suffer the BS-to-BS interference from the interfering cell, or suffers a minor BS-to-BS interference from the interfering cell; while "×" indicates not concerning whether it suffers the BS-to-BS interference from the interfering cell.

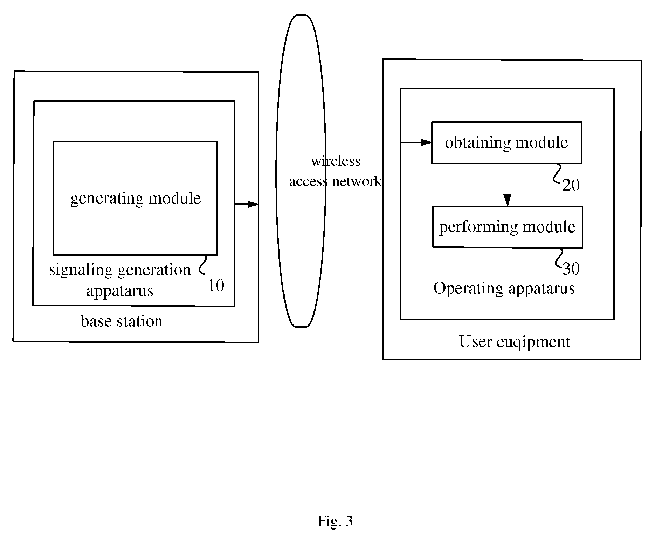

Refer to Fig. 3, in the semi-static pattern of the present invention, the base station of the TDD system comprises a signaling generation apparatus that comprises a generating module 10; the user equipment comprises an operating apparatus that comprises an obtaining module 20 and a performing module 30.

The generating module 10 generates signaling sent to a user equipment in a cell served by the base station when a predetermined trigger condition is satisfied, which signaling includes indication information for two subframe sets, which two subframe sets are obtained by partitioning at least one subframe in the uplink and downlink subframe configuration(s) based on interference level(s) of the at least one subframe. Herein, in the semi-static pattern, the signaling generated by the base station has a transmit frequency lower than the transmit frequency of the signaling generated in the dynamic pattern, e.g., the transmit time interval may be at a 100ms order of magnitude. For example, in the semi-static pattern, the signaling generated by the base station includes RRC (Radio Resource Control) signaling, etc.

Herein, the predetermined trigger condition may include any condition that can trigger the base station to generate the above signaling. Preferably, the predetermined trigger condition includes, but not limited to: 1) the TDD uplink and downlink subframe configuration of the present cell changes; 2) the TDD uplink and downlink subframe configuration(s) of the interfering cell(s) changes, and the like. Those skilled in the art should understand, the above two trigger conditions are only exemplary, and any other conditions that can trigger the base station to generate the above signaling should be included within the scope of the present invention.

Herein, the base station may divide the at least one subframe to obtain two subframe sets based on the interference suffered by the at least one subframe in the uplink and downlink subframe configuration. It should be noted that the base station may notify the user equipment of the two subframe sets through the bitmap manners shown with reference to Fig. 1a and Fig. 1b; or, the base station may also notify the user equipment of the two subframe sets by notifying the two subframe sets, respectively.

Herein, the indication information of the two subframe sets may indicate the subframes included into the two subframe sets, respectively, in a plurality of manners. For example, the indication information includes two groups of bit information corresponding to the two subframe sets, respectively, while each bit in each group of bit information is for indicating an interference suffered by a frame in the subframe set corresponding to this group of bit information from the interfering cell; for example, the indicating information may directly include "1" and "0" corresponding to multiple subframes, as depicted in the examples shown in Fig. 1a and Fig. 1b, thereby directly indicating the subframe set to which the multiple subframes belong in a manner of bitmap; or, the indication information may employ other manner to indicate the subframes included in the two subframe sets, respectively, which other manner will be described in detail in the subsequent "dynamic pattern."

Specifically, the generating module 10 may attach the indication information of the two subframe sets into the RRC signaling to be sent to the user equipment in the cell served by the base station.

It should be noted that the above example is only for better illustrating the technical solution of the present invention, rather than limiting the present invention. Those skilled in the art should understand, any implementation of generating, in the semi-static pattern, a signaling transmitted to one cell served by the base station when a predetermined trigger condition is satisfied, should be included within the scope of the present invention.

Then, after the base station transmits the signaling to the user equipment, the obtaining module 20 obtains the indication information of the two subframe sets. Specifically, in the semi-static pattern, the obtaining module 20 further comprises a first receiving module (not shown). The first receiving module receives signaling, from the base station, including the indication information.

When performing an uplink or a downlink operation with the base station on the at least one subframe, the performing module 30 performs a corresponding operation based on the subframe set to which the at least one subframe belongs, respectively.

For example, when a subframe belongs to a subframe set suffering less interference, the performing module 30 may transmit a signal to the base station with a lower power; when a subframe belongs to a subframe set suffering a greater interference, the performing module 30 may transmit a signal to the base station with a larger power.

It should be noted that the above example is only for better illustrating the technical solution of the present invention, rather than limiting the present invention. Those skilled in the art should understand, any implementation manner of performing a corresponding operation based on the subframe set to which the at least one subframe belongs, respectively, when performing an uplink or a downlink operation with the base station on the at least one subframe, should be included within the scope of the present invention.

Through the semi-static pattern, the base station may notify the variable two subframe sets to the user equipment with a frequency lower than the dynamic pattern, such that the user equipment performs differentiated operations on the two subframe sets.

### DYNAMIC PATTERN:

The variation frequency of the subframes in the two subframe sets in the dynamic pattern is generally lower than the variation frequency of the subframes in the two subframe sets in the semi-static pattern.

In the dynamic pattern, similar to the semi-static pattern, the main operation is that at least one varying subframe in different uplink and downlink subframe configurations are divided into two subframe sets. The specific dividing manner may refer to the depiction in the semi-static pattern, which will not be detailed here.

In the dynamic pattern, the base station comprises a generating module 10, and the user equipment comprises an obtaining module 20 and a performing module 30.

The generating module 10 generates signaling sent to a user equipment in a cell served by the base station when a predetermined trigger condition is satisfied, which signaling includes indication information for two subframe sets, which two subframe sets are obtained by partitioning at least one subframe in the uplink and downlink subframe configuration(s) based on interference level(s) of the at least one subframe.

Herein, in the dynamic pattern, the signaling generated by the generating module 10 has a transmit frequency higher than the transmit frequency of the signaling generated in the semi-static pattern, e.g., the transmit time interval may be as high as 10ms order of magnitude. In the dynamic pattern, the signaling generated by the generating module 10 includes physical layer signaling, and the like.

Preferably, the physical layer signaling generated by the generating module 10 includes, but not limited to:
1) the generating module 10 directly generates a new physical layer signaling including indication information of the two subframes. The new physical layer signaling includes the indication information; preferably, when there is a configuration of multiple carrier units, the new physical layer signaling further comprises an index of carrier units;
2) the generating module 10 comprises a sub-generating module (not shown). The sub-generating module attaches the indication information to a pre-existing physical layer signaling. Preferably, the pre-existing physical layer signaling includes, but not limited to: a) uplink and downlink dynamic configuration signaling; b) uplink and downlink UE (user equipment) schedule signaling. This physical layer signaling includes contents that should be included in the pre-existing physical layer signaling and the indication information.

It should be noted that the above example is only for better illustrating the technical solution of the present invention, rather than limiting the present invention. Those skilled in the art should understand, any generated physical layer signaling including the indication information should be included within the scope of the present invention.

Herein, the indication information of the two subframe sets may adopt a plurality of manners to indicate the subframes included within the two subframe sets, respectively, wherein the manner "the indication information includes two groups of bit information corresponding to the two subframe sets, respectively, while each bit in each group of bit information is for indicating an interference suffered by a frame in the subframe set corresponding to this group of bit information from the interfering cell" has been depicted in detail in the above illustration of "semi-static pattern," which will not be detailed here. Hereinafter, another implementation of the indication information will be introduced:

The indication information includes one of identification information of multiple subframe patterns, wherein one subframe pattern indicates one of the multiple combination manners of that the at least one subframe varying in different uplink and downlink subframe configurations belongs to the two subframe sets, respectively. Since the TDD uplink and downlink subframe configurations have 5-6 variable subframes, there are 2⁵ to 2⁶ kinds of combination manners in total in which the at least one subframe belongs to the two subframe sets, respectively. The three CSI test subframe patterns and the three ULPC subframe patterns as shown in Figs. 1a and 1b are just several of all possible subframe patterns.

It should be noted that, in order to reduce the number of subframe patterns in use, so as to further reduce the bits occupied by identification information of subframe patterns, a selecting module (not shown) included in the signaling generation apparatus may select, from among all subframe patterns of the respective subframes, the multiple subframe patterns used in the present embodiment. Preferably, the selecting module may select more commonly-used multiple subframe patterns based on various factors, e.g., use frequency or use amount of subframe patterns within a period of time. More preferably, the amount of subframe patterns selected by the selecting module may be 8 or less, so as to control the number of bits occupied by the identification information of the subframe patterns to be three or less.

Besides, in the present implementation, the signaling generation apparatus further comprises a first transmitting module (not shown). The first transmitting module needs to transmit the combination manners corresponding to the identification information of respective subframe patterns in use to the user equipment in the cell, wherein the base station may transmit the combination manner corresponding to the identification information to the user equipment before the operation of the generating module 10.

After the base station transmits the signaling to the user equipment, the obtaining module 20 obtains the indication information of the two subframe sets. Step S2' is identical or similar to step S2, which will not be detailed here.

When performing an uplink or downlink operation with the base station on the at least one subframe, the performing module 30 performs a corresponding operation based on the subframe set to which the at least one subframe belongs, respectively. The corresponding operation has been described in detail in the depiction of step S3, which will not be detailed here.

Herein, when the indication information of two subframe sets includes one of identification information of the multiple subframe patterns, a second receiving module (not shown) included in the operating apparatus receives combination manners corresponding to the identification information of respective subframe patterns from the base station; besides, a determining module (not shown) included in the performing module 30 determines the subframe set to which the at least subframe belongs, respectively, based on one piece of identification information of subframe patterns included in the signaling and the combination manners; and a sub-performing module (not shown) included in the performing module 30 performes a corresponding operation based on the subframe set to which the at least subframe belongs, respectively, when performing an uplink or downlink operation with the base station on the at least one subframe.

Through the dynamic pattern, the base station may notify the varying two subframe sets to the user equipment with a higher frequency, such that the user equipment performs differentiated operations on the two subframe sets.

It should be noted that in the semi-static pattern and the dynamic pattern, a plurality of manners may be adopted to notify the user equipment to obtain indication information from corresponding carrier unit(s). Hereinafter, two solutions will be provided for illustration.

In the first solution, matching relationship(s) between carrier indicate field (CIF) identification(s) of carrier units of respective user equipment(s) with carrier aggregation(s) in the current serving cell and physical identifier(s) of carrier unit(s) of the base station serving the cell might be different, and the signaling generated by the base station comprises physical identifier(s) of carrier unit(s) of the base station. Besides, the base station pre-transmits the matching relationships between the physical identification(s) of the carrier unit(s) of the user equipment(s) and the carrier indicate filed identification(s) of the carrier unit(s) of the base station serving the cell to respective user equipment(s) in the cell. The first receiving module further comprises a sub-receiving module (not shown). The sub-receiving module receives the signaling from the base station, and determines carrier unit(s), which the indication information is applicable to, from carrier unit(s) of the signaling based on a pre-obtained matching relationship(s) between physical identification(s) of carrier unit(s) of the user equipment and carrier indicate field identification(s) of carrier unit(s) of the base station.

In the second solution, matching relationship(s) between carrier indicate field identification(s) of carrier unit(s) of respective user equipment(s) in the current serving cell and carrier indicate field identification(s) of the carrier unit(s) of the base station serving the cell are identical, wherein a second transmitting module (not shown) included in a signaling generation apparatus transmits the carrier indicate field identification(s) of carrier unit(s) of respective user equipment(s) to the respective user equipment(s) in the cell. As a result, the respective user equipment(s) may obtain indication information based on uniform carrier indicate field identification(s), without bothering to determine their own carrier indicate field identification(s) based on the physical identification(s) of the carrier unit(s) of the base station.

It should be noted that the above two solutions are only for better illustrating the technical solution of the present invention, not intended to limit the present invention. Those skilled in the art should understand, any implementation manner enabling the user equipment to determine the carrier unit(s) in use based on the indication information should be included within the scope of the present invention.

Through the above solutions, even the signaling changes due to attachment of indication information, the user equipment can still accurately obtain the indication information.

It should be noted that the present invention may be implemented in software and/or a combination of software and hardware. For example, each module of the present invention may be implemented by an application-specific integrated circuit (ASIC) or any other similar hardware device.

To those skilled in the art, it is apparent that the present invention is not limited to the details of the above exemplary embodiments, and the present invention may be implemented with other embodiments without departing from the spirit or basic features of the present invention. Thus, in any way, the embodiments should be regarded as exemplary, not limitative; the scope of the present invention is limited by the appended claims, instead of the above depiction. Thus, all variations intended to fall into the meaning and scope of equivalent elements of the claims should be covered within the present invention. No reference signs in the claims should be regarded as limiting the involved claims. Besides, it is apparent that the term "comprise" does not exclude other units or steps, and singularity does not exclude plurality. A plurality of units or modules stated in a system claim may also be implemented by a single unit or module through software or hardware. Terms such as the first and the second are used to indicate names, but do not indicate any particular sequence.

## Claims

1. A signaling generation apparatus for generating signaling including subframe set information in a base station, wherein the base station belongs to a TDD system, neighboring cells in the TDD system can adopt different uplink and downlink subframe configurations at the same time, and the signaling generation apparatus comprises:
a generating module configured to generate signaling sent to a user equipment in a cell served by the base station when a predetermined trigger condition is satisfied, which signaling includes indication information for two subframe sets, which two subframe sets are obtained by partitioning at least one subframe in the uplink and downlink subframe configurations) based on interference level(s) of the at least one subframe.

2. The signaling generation apparatus according to claim 1, wherein the signaling includes physical-layer signaling.

3. The signaling generation apparatus according to claim 2, wherein the generating module comprises:
a sub-generating module configured to attach the indication information to a preset physical-layer signaling when a predetermined trigger condition is satisfied.

4. The signaling generation apparatus according to claim 2 or 3, wherein the indication information includes two sets of bit information corresponding to the two subframe sets, respectively, each bit in each set of bit information being for indicating an interference level of one subframe in the subframe set, which this set of bit information corresponds to, suffered from an interfering cell.

5. The signaling generation apparatus according to claim 2 or 3, wherein the indication information includes one of identification information of a plurality of subframe patterns, one subframe pattern indicating one of a plurality of combination manners of that the at least one subframe belongs to the two subframe sets, the signaling generation apparatus further comprising:
a first transmitting module configured to transmit combination manners, which the identification information of respective subframe patterns corresponds to, to the user equipment(s) in the cell.

6. The signaling generation apparatus according to claim 5, wherein the signaling generation apparatus further comprises:
a selecting module configured to select the plurality of subframe patterns from all subframe patterns of respective subframes.

7. The signaling generation apparatus according to any one of claims 1 to 6, wherein matching relationship(s) between carrier indicate field identification(s) of carrier unit(s) of respective user equipment(s) with carrier aggregation(s) in the cell and physical identifier(s) of carrier unit(s) of the base station serving the cell might be different, and the generated signaling comprises physical identifiers of carrier units of the base station.

8. The signaling generation apparatus according to any one of claims 1 to 6, wherein matching relationship(s) between carrier indicate field identification(s) of carrier unit(s) of respective user equipment(s) in the cell and carrier indicate field identification(s) of carrier unit(s) of the base station serving the cell are identical, wherein the signaling generation apparatus further comprises:
a second transmitting module configured to transmit carrier indicate field identification(s) of carrier unit(s) of respective user equipment(s) to the respective user equipment(s) in the cell.

9. An operating apparatus for operating in a user equipment based on subframe sets, wherein the user equipment is located in a TDD system, neighboring cells in the TDD system can adopt different uplink and downlink subframe configurations at the same time, and the operating apparatus comprises:
an obtaining module configured to obtain indication information of two subframe sets, which two subframe sets are obtained by partitioning at least one subframe in the uplink and downlink subframe configurations based on interference level(s) of the at least one subframe;
a performing module configured to perform a corresponding operation based on the subframe set to which the at least one subframe belongs, respectively, when performing an uplink or downlink operation with a base station on the at least one subframe.

10. The operating apparatus according to claim 9, wherein the obtaining module comprises:
a first receiving module configured to receive signaling from the base station, which signaling includes the indication information.

11. The operating apparatus according to claim 10, wherein the first receiving module comprises:
a sub-receiving module configured to receive the signaling from the base station, and determine carrier unit(s), which the indication information is applicable to, from carrier unit(s) of the signaling based on pre-obtained matching relationship(s) between physical identification(s) of carrier unit(s) of the user equipment and carrier indicate field identification(s) of carrier unit(s) of the base station.

12. The operating apparatus according to claim 10, wherein the indication information includes one of identification information of a plurality of subframe patterns, one subframe pattern indicating one of a plurality of combination manners of that the at least one subframe belongs to the two subframe sets, wherein the operating apparatus further comprises:
a second receiving module configured to receive combination manners, which the identification information of respective subframe patterns corresponds to, from the base station;
wherein the performing module comprises:
a determining module configured to determine the subframe set to which the at least subframe belongs, respectively, based on one piece of identification information of subframe patterns included in the signaling and the combination manners;
a sub-performing module configured to perform a corresponding operation based on the subframe set to which the at least subframe belongs, respectively, when performing an uplink or downlink operation with the base station on the at least one subframe.

13. A TDD system, comprising a signaling generation apparatus according to at least one of claims 1 to 8, and an operating apparatus according to at least one of claims 9 to 12.

14. A method for generating signaling including subframe set information in a base station, wherein the base station belongs to a TDD system, neighboring cells in the TDD system can adopt different uplink and downlink subframe configurations at the same time, and the method comprises:
a. generating signaling sent to a user equipment in a cell served by the base station when a predetermined trigger condition is satisfied, which signaling includes indication information for two subframe sets, which two subframe sets are obtained by partitioning at least one subframe in the uplink and downlink subframe configurations based on interference level(s) of the at least one subframe.

15. A method for operating in a user equipment based on subframe sets, wherein the user equipment is located in a TDD system, neighboring cells in the TDD system can adopt different uplink and downlink subframe configurations at the same time, and the method comprises:
A. obtaining indication information of two subframe sets, which two subframe sets are obtained by partitioning at least one subframe in the uplink and downlink subframe configurations based on interference level(s) of the at least one subframe;
B. performing a corresponding operation based on the subframe set to which the at least one subframe belongs, respectively, when performing an uplink or downlink operation with a base station on the at least one subframe.
